# EUROPÄISCHE PATENTSCHRIFT

(11) **EP 4 466 166 B1**
(45) Veröffentlichungstag und Bekanntmachung des Hinweises auf die Patenterteilung: **28.01.2026**
(21) Anmeldenummer: 23700474.2
(22) Anmeldetag: 09.01.2023
(51) Int. Cl.: B60T 7/20, B60T 8/17, B60T 13/66, B60T 13/68

(54) **ELEKTROPNEUMATISCHES ANHÄNGER-FESTSTELLBREMSSYSTEM, ANHÄNGER, ZUGGESPANN**
ELECTROPNEUMATIC TRAILER PARKING BRAKE SYSTEM, TRAILER, TRAILER COUPLING
SYSTÈME DE FREIN DE STATIONNEMENT DE REMORQUE ÉLECTROPNEUMATIQUE, REMORQUE, ATTELAGE DE REMORQUE

(30) Priorität: 19.01.2022 DE 102022101141
(43) Veröffentlichungstag der Anmeldung: 27.11.2024
(73) Patentinhaber: ZF CV Systems Global GmbH, 3006 Bern (CH)
(72) Erfinder: VAN THIEL, Julian, 30938 Grossburgwedel (DE)
(74) Vertreter: Rabe, Dirk-Heinrich
(86) Internationale Anmeldenummer: PCT/EP2023/050267
(87) Internationale Veröffentlichungsnummer: WO 2023/138926

(56) Entgegenhaltungen:
- EP-A1- 3 444 155
- GB-A- 2 583 533

## Beschreibung

Die Erfindung betrifft in einem ersten Aspekt ein elektropneumatisches Anhänger-Feststellbremssystem für einen Anhänger gemäß dem Oberbegriff des Anspruchs 1. Die Erfindung betrifft in einem zweiten Aspekt einen Anhänger mit einem elektropneumatischen Anhänger-Feststellbremssystem gemäß dem ersten Aspekt der Erfindung und in einem dritten Aspekt ein Zuggespann mit einem Anhänger gemäß dem zweiten Aspekt der Erfindung.

Elektropneumatische Feststellbremssysteme für Nutzfahrzeuge mit Anhängern, sind allgemein bekannt. In der Regel erfolgt bei bekannten elektropneumatischen Feststellbremssystemen eine pneumatische Steuerung über ein in einem Nutzfahrzeug, das heißt im Zugfahrzeug des Anhängers, angeordnetes Anhänger-Steuerventil. Insbesondere sind derartige Anhänger-Steuerventile ausgebildet, einen Federspeicherdruck als Steuerdruck für ein pneumatisches Anhänger-Feststellbremsmodul im Anhänger bereitzustellen. Eine derartige Anordnung mit einem Anhänger-Steuerventil ist beispielsweise in DE 10 2015 008 377 A1 gezeigt.

Die GB2583533A betrifft ein Bremssystem für ein Anhängefahrzeug mit mehreren Achsen, Das System umfasst erste und zweite pneumatische Kreise zur Luftdruckversorgung von Bremsgeräten an den Rädern der Achsen. Ebenfalls enthalten sind ein Anhängerbremsmodul mit einer ersten elektronischen Steuereinheit und eine Federspeicherbremsmodulatorventilanordnung, die einen Eingang von einem pneumatischen Kreis, Steuerdruck von dem Modul und elektrische Signale von einer zweiten ECU empfängt. Zur Redundanz bei z.B. elektrischem Fehler oder Stromausfall ist der Luftstrom zu den Bremsen vom Modul oder vom Federspeicher-Modulatorventil steuerbar.

Die EP3444155A1 beschreibt eine elektronisch gesteuerte Anhänger-Bremssteuereinheit für einen Anhänger eines Nutzfahrzeugs, welche sowohl eine ModulatorVentileinrichtung, welche als EBS-Steuereinheit ausgebildet sein kann, als auch eineFederspeicherbrems-Ventileinrichtung aufweist. Mittels der FederspeicherbremsVentileinrichtung sind Federspeicherbremsfunktionen wie eine Parkfunktion, eine Lösefunktion, eine Overridefunktion, eine Federspeicherbremse-Immobilisierfunktion,eine ungeregelte Notbremsfunktion, eine geregelte Federspeicher-Notbremsfunktion,eine behältergesteuerte Federspeicherbremsfunktion, eine automatische ParkventilBetätigungsfunktion, eine Hilfsbremsfunktion, eine Streckbremsfunktion, eine Testfunktion oder eine Notbrems-Verhinderungsfunktion bereitstellbar.

Derartige Ansätze sind weiterhin verbesserungswürdig. Insbesondere ist es wünschenswert, die Bedienbarkeit eines Anhänger-Feststellbremssystems zu verbessern. Dies betrifft insbesondere Situationen, in denen ein Anhänger im abgekoppelten Zustand rangiert wird. Auch wäre eine Möglichkeit zur elektrischen oder elektronischen Steuerung eines Anhänger-Feststellbremssystems wünschenswert. Eine derartige Möglichkeit zur elektrischen oder elektronischen Steuerung würde die Steuerbarkeit des Anhängers, insbesondere bei automatisierten, autonomen oder teilautonomen Fahrfunktionen des Anhängers oder des Zuggespanns, vorteilhaft verbessern.

An dieser Stelle setzt die Erfindung an, deren Aufgabe es ist, ein verbessertes, elektropneumatisches Anhänger-Feststellbremssystem für einen Anhänger anzugeben. Insbesondere soll die Bedienbarkeit eines Anhänger-Feststellbremssystems verbessert werden und/oder eine Möglichkeit zur elektrischen oder elektronischen Steuerung des Anhänger-Feststellbremssystems bereitgestellt werden.

Die Aufgabe, betreffend das elektropneumatische Anhänger-Feststellbremssystem, wird durch die Erfindung mit einem elektropneumatischen Anhänger-Feststellbremssystem des Anspruchs 1 gelöst. Die Erfindung geht aus von einem elektropneumatischen Anhänger-Feststellbremssystem für einen Anhänger, das ein elektropneumatisches Anhänger-Feststellbremsmodul umfasst, wobei das elektropneumatische Anhänger-Feststellbremsmodul zum Lösen oder Einlegen des elektropneumatischen Anhänger-Feststellbremssystems in Abhängigkeit eines Bediensignals ausgebildet ist und aufweist: einen Vorratsanschluss zum Empfangen eines Vorratsdrucks, wenigstens einen Feststellbremsanschluss zum Anschließen wenigstens eines Feststellbremszylinders, eine den Vorratsdruck empfangende Hauptventileinheit, die dazu ausgebildet ist, in Abhängigkeit von einem an einem Steueranschluss anliegenden Steuerdruck einen Federspeicherdruck an dem Feststellbremsanschluss auszusteuern, und eine den Vorratsdruck empfangende Vorsteuerventilanordnung zum Bereitstellen des Steuerdrucks.

Erfindungsgemäß ist bei dem elektropneumatischen Anhänger-Feststellbremssystem eine elektronische Steuereinheit vorgesehen, die ausgebildet ist, das Bediensignal in Form eines elektrischen Bediensignals zum Lösen oder Einlegen des elektropneumatischen Anhänger-Feststellbremssystems zu empfangen und in Abhängigkeit des Bediensignals ein elektrisches Schaltsignal an der Vorsteuerventilanordnung bereitzustellen, wobei die Vorsteuerventilanordnung ausgebildet ist, in Abhängigkeit des elektrischen Schaltsignals den Steuerdruck bereitzustellen.

Die Erfindung schließt die Erkenntnis ein, dass mittels einer elektronischen Steuerbarkeit des elektropneumatischen Anhänger-Feststellbremsmoduls verbesserte Möglichkeiten zur Steuerung des elektropneumatischen Anhänger-Feststellbremssystems zur Verfügung stehen. Indem eine elektronische Steuereinheit in dem Anhänger-Feststellbremsmodul und insbesondere pneumatisch unabhängig von Feststellbremseinrichtungen wie z.B. Anhänger-Steuerventilen im Zugfahrzeug vorgesehen wird, wird über das elektrische Bediensignal eine sogenannte by-wire-Steuerbarkeit, das heißt eine elektrische bzw. elektronische Steuerbarkeit, des Anhänger-Feststellbremssystems, unabhängig von einem Feststellbremssystem des Zugfahrzeugs ermöglicht.

Ein Lösen des elektropneumatischen Anhänger-Feststellbremssystems umfasst insbesondere ein Belüften von Federspeicherbremszylindern mit einem Federspeicherdruck. Ein Einlegen des elektropneumatischen Anhänger-Feststellbremssystems umfasst insbesondere ein Entlüften der Federspeicherbremszylinder.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Im Rahmen einer bevorzugten Weiterbildung ist eine Anhänger-Bedieneinheit zum Bereitstellen des Bediensignals vorgesehen. Diese Weiterbildung schließt die Erkenntnis ein, dass die Bedienbarkeit des Anhänger-Feststellbremssystems weiter verbessert werden kann, indem eine Anhänger-Bedieneinheit vorgesehen wird. Mittels der Anhänger-Bedieneinheit können, insbesondere unabhängig von einem Feststellbremssystem des Zugfahrzeugs, Bediensignale zum Steuern des Anhänger-Feststellbremssystems bereitgestellt werden. Die Bedieneinheit ist bevorzugt am Anhänger angeordnet, besonders bevorzugt an einer von außen zugänglichen Stelle. In anderen bevorzugten Weiterbildungen ist die Bedieneinheit im Nutzfahrzeug, das heißt im Zugfahrzeug des Anhängers, angeordnet. Vorteilhaft ist somit beispielsweise auch dann eine Ansteuerung des Anhänger-Feststellbremssystems möglich, wenn sich der Anhänger im abgekoppelten Zustand befindet.

Bevorzugt ist das elektrische Bediensignal ein elektronisches Bediensignal. Im Rahmen einer bevorzugten Weiterbildung weist die elektrische Steuereinheit eine drahtgebundene oder eine drahtlose Schnittstelle zum Empfangen des elektrischen Bediensignals von einem weiteren elektrischen oder elektronischen Steuergerät auf.

Bevorzugt weist die Anhänger-Bedieneinheit ein elektronisches Bedienelement auf, das signalführend mit der elektrischen Steuereinheit zum Bereitstellen des elektrischen Bediensignals verbunden oder verbindbar ist. Das elektronische Bedienelement umfasst bevorzugt ein elektronisches Anzeigemittel, insbesondere einen Bildschirm, eine Leuchte oder dergleichen Anzeigemittel, und/oder Eingabemittel, insbesondere Tasten, Schalter oder dergleichen Eingabemittel zum Erzeugen des elektrischen Bediensignals. Bevorzugt können das Anzeigemittel und das Eingabemittel kombiniert, beispielsweise in Form eines Touchscreens, ausgebildet sein.

Im Rahmen einer bevorzugten Weiterbildung ist vorgesehen, dass das elektronische Bedienelement einen Parkbremsschalter umfasst. Der Parkbremsschalter ist bevorzugt als elektrischer oder elektronischer Parkbremsschalter zum Bereitstellen des elektrischen Bediensignals in Abhängigkeit einer manuellen Betätigung ausgebildet.

Bevorzugt weist die Anhänger-Bedieneinheit ein pneumatisches Bedienelement auf, das pneumatisch mit dem elektropneumatischen Anhänger-Feststellbremsmodul zum Bereitstellen eines pneumatischen Bediensignals, besonders bevorzugt eines Lösedrucks, verbunden oder verbindbar ist. Bevorzugt ist das pneumatische Bedienelement mit der Vorsteuerventilanordnung und/oder mit dem Steueranschluss pneumatisch verbunden oder verbindbar.

Die Erfindung wird dadurch weitergebildet, dass das elektropneumatische Anhänger-Feststellbremssystem einen Drucksensor aufweist, der pneumatisch mit dem Vorratsanschluss zum Erfassen des am Vorratsanschluss ausgesteuerten Vorratsdrucks verbunden ist. Mittels eines Drucksensors, der pneumatisch mit dem Vorratsanschluss verbunden ist, kann vorteilhaft ein Abriss einer Anhänger-Vorratsleitung oder dergleichen erkannt werden. Besonders vorteilhaft ermöglicht eine solche Erkennung die Möglichkeit einer kontrollierten Überführung des Anhängers in einen sicheren Zustand. Im Vergleich mit einer, durch ein unkontrolliertes Einfallen der Federspeicherbremszylinder hervorgerufenen, Notbremsung, bietet eine Weiterbildung mit einem Drucksensor die Möglichkeit, eine kontrollierte, insbesondere elektronisch gesteuerte, Bremsung hervorzurufen. Eine kontrollierte Bremsung kann beispielsweise durch ein Anhänger-Betriebssystem oder ein zeitlich gesteuertes Entlüften der Federspeicherbremszylinder durch das elektropneumatische Anhänger-Feststellbremssystem erfolgen. Besonders vorteilhaft kann eine Notbremsung durch ein Ansteuern, insbesondere ein intermittierendes oder ein graduell ansteigendes Ansteuern bzw. Bestromen, eines Halteventils der Vorsteueranordnung hervorgerufen werden.

Besonders bevorzugt ist die Anhänger-Bedieneinheit als eine, das elektronische Bedienelement umfassende, Baueinheit mit einem integralen oder modularen Gehäuse ausgebildet. Bevorzugt umfasst die Anhänger-Bedieneinheit mindestens zwei verbindbare, vorzugsweise zusammenflanschbare, Gehäusemodule. Mittels eines integralen oder modularen Gehäuses kann vorteilhaft eine kompakte Bauform und ein effektiver Schutz der Anhänger-Bedieneinheit erreicht werden. Bevorzugt sind das elektronische Bedienelement und ein manuell betätigbares Ventil in der Baueinheit angeordnet.

Im Rahmen einer bevorzugten Weiterbildung ist vorgesehen, dass das elektropneumatische Anhänger-Feststellbremssystem ein manuell betätigbares Ventil umfasst, wobei das manuell betätigbare Ventil aufweist: ein manuelles Betätigungsmittel zum Umschalten des manuell betätigbaren Ventils mindestens zwischen einer ersten Ventilstellung und einer zweiten Ventilstellung, einen ersten Ventilanschluss, der zum Empfangen des Vorratsdrucks ausgebildet ist und einen zweiten Ventilanschluss, der zum Bereitstellen eines Lösedrucks pneumatisch mit dem Steueranschluss verbunden ist, wobei in der ersten Ventilstellung des manuell betätigbaren Ventils der erste Ventilanschluss pneumatisch mit dem zweiten Ventilanschluss verbunden ist zum Einsteuern des Vorratsdrucks als Lösedruck an den Steueranschluss. Mittels eines manuell betätigbaren Ventils kann vorteilhaft ein pneumatisches Bediensignal in Form des Lösedrucks bereitgestellt werden. Auf diese Weise wird vorteilhaft eine pneumatische Möglichkeit zum Ansteuern des elektropneumatischen Anhänger-Feststellbremsmoduls, insbesondere zusätzlich zum elektrischen Bediensignal, bereitgestellt. Mittels eines manuell betätigbaren Ventils ist vorteilhaft ein Ansteuern des Anhänger-Feststellbremsmoduls auch in einem elektrisch passiven Zustand möglich, das heißt wenn das Anhänger-Feststellbremsmodul nicht elektrisch versorgt wird. Bevorzugt umfasst die Baueinheit das manuell betätigbare Ventil. Bevorzugt ist der erste Ventilanschluss des manuell betätigbaren Ventils zum Empfangen des Vorratsdrucks pneumatisch mit dem Vorratsanschluss verbunden.

Die Erfindung wird dadurch weitergebildet, dass das manuell betätigbare Ventil ein 3/2-Wege-Ventil mit einem Entlüftungsanschluss ist, der in die Umgebung entlüftet, wobei das 3/2-Wege-Ventil zwischen der ersten Ventilstellung und der zweiten Ventilstellung umschaltbar ist, wobei in der ersten Ventilstellung der erste Ventilanschluss pneumatisch mit dem zweiten Ventilanschluss verbunden ist und bevorzugt der Entlüftungsanschluss gesperrt ist, sowie in der zweiten Ventilstellung der zweite Ventilanschluss mit dem Entlüftungsanschluss pneumatisch verbunden ist und bevorzugt der erste Ventilanschluss gesperrt ist.

Bevorzugt ist vorgesehen, dass das manuelle Betätigungsmittel ein Zug-Druck-Element umfasst, das zur Betätigung des manuell betätigbaren Ventils in eine axiale Richtung bewegt werden kann. Mittels eines derartigen, sogenannten Push-Pull-Ventils kann vorteilhaft das manuell betätigbare Ventil auf einfache Weise manuell zwischen zwei Ventilstellungen bzw. definierten Zuständen, nämlich einer ersten Ventilstellung mit einem ersten Zustand, in dem das elektropneumatische Anhänger-Feststellbremssystem gelöst ist und einer zweiten Ventilstellung mit einem zweiten Zustand, in dem das elektropneumatische Anhänger-Feststellbremssystem eingelegt ist, umgeschaltet werden.

Im Rahmen einer bevorzugten Weiterbildung ist vorgesehen, dass das manuell betätigbare Ventil ein pneumatisches Betätigungsmittel mit einem pneumatischen Schalteingang zum Empfangen eines Umschaltdrucks über einen pneumatischen Schaltpfad aufweist, wobei das pneumatische Betätigungsmittel zum Umschalten des manuell betätigbaren Ventils mindestens von der ersten Ventilstellung in die zweite Ventilstellung in Abhängigkeit des Umschaltdrucks ausgebildet ist. Mittels eines pneumatischen Betätigungsmittels wird vorteilhaft eine pneumatische Rückstellfunktion ermöglicht, mit der das mechanisch betätigbare Ventil auf pneumatische Weise, bevorzugt über einen pneumatischen Pfad des elektropneumatischen Anhänger-Feststellbremsmoduls, geschaltet werden kann. Bevorzugt ist das pneumatische Betätigungsmittel ausgebildet, das manuell betätigbare Ventil in die entlüftete, zweite Ventilstellung zu schalten. Bevorzugt weist das manuell betätigbare Ventil und/oder die Anhänger-Bedieneinheit ein Anzeigemittel zum Anzeigen der Ventilstellung auf.

Die Erfindung wird dadurch weitergebildet, dass der pneumatische Schaltpfad mit einem Vorsteuerpfad zum Empfangen des Steuerdrucks verbunden ist, wobei der Vorsteuerpfad die Vorsteuerventilanordnung und den Steueranschluss pneumatisch verbindet. In einer derartigen Weiterbildung kann vorteilhaft der Steuerdruck als Umschaltdruck am pneumatischen Betätigungsmittel bereitgestellt werden. Vorteilhaft kann durch eine derartige Anordnung das Aussteuern eines Steuerdrucks am Vorsteuerpfad das manuell betätigbare Ventil in die zweite, den Steueranschluss der Hauptventileinheit entlüftende Ventilstellung, geschaltet werden.

Im Rahmen einer bevorzugten Weiterbildung ist vorgesehen, dass im pneumatischen Schaltpfad ein elektrisch steuerbares Schaltventil zum steuerbaren Verbinden und Schließen des pneumatischen Schaltpfades angeordnet ist, wobei der pneumatische Schaltpfad mit dem Feststellbremsanschluss zum Empfangen des Federspeicherdrucks pneumatisch verbunden ist, oder der pneumatische Schaltpfad mit dem Vorratsanschluss zum Empfangen des Vorratsdrucks pneumatisch verbunden ist. Mittels eines elektrisch steuerbaren Schaltventils kann das manuell betätigbare Ventil in verbessert steuerbarer Weise über das pneumatische Betätigungsmittel betätigt werden. Bevorzugt ist das Schaltventil als 3/2-Wegeventil mit einem ersten Schaltventilanschluss ausgebildet, der mit dem Feststellbremsanschluss oder mit dem Vorratsanschluss pneumatisch verbunden ist, und einem zweiten Schaltventilanschluss, der mit dem pneumatischen Schalteingang pneumatisch verbunden ist, und einem dritten Schaltventilanschluss der mit einem Entlüftungsanschluss pneumatisch verbunden ist, wobei in einer ersten Schaltventilstellung der erste Schaltventilanschluss mit dem zweiten Schaltventilanschluss pneumatisch verbunden ist, und in einer zweiten Schaltventilstellung der zweite Schaltventilanschluss mit dem dritten Schaltventilanschluss pneumatisch verbunden ist.

Die Erfindung wird dadurch weitergebildet, dass der zweite Ventilanschluss des manuell betätigbaren Ventils über einen Anti-Compound-Anschluss pneumatisch mit dem Steueranschluss verbunden ist, und/oder der zweite Ventilanschluss über ein Select-High-Löseventil pneumatisch mit dem Anti-Compound-Anschluss verbunden ist, derart, dass derjenige von dem zweiten Ventilanschluss und dem Anti-Compound-Anschluss mit dem Steueranschluss verbunden wird, an dem der höhere Druck anliegt. In einer derartigen Weiterbildung kann vorteilhaft ein vorhandener Anti-Compound-Anschluss genutzt werden, um zusätzlich das manuell betätigbare Ventil pneumatisch mit dem Steueranschluss der Hauptventileinheit zu verbinden.

Bevorzugt ist der Anti-Compound-Anschluss pneumatisch über ein Select-High-Wechselventil mit dem Steueranschluss verbunden derart, dass derjenige von dem Anti-Compound-Anschluss und einem Vorsteuerpfad mit dem Steueranschluss verbunden wird, an dem der höhere Druck anliegt. In besonders bevorzugten Weiterbildungen umfasst das elektropneumatische Anhänger-Feststellbremsmodul ein Select-High-Löseventil und ein Select-High-Wechselventil.

Bevorzugt ist vorgesehen, dass der zweite Ventilanschluss des manuell betätigbaren Ventils über die Vorsteuerventilanordnung pneumatisch mit dem Steueranschluss verbunden ist. In einer derartigen Weiterbildung kann die Bereitstellung des Lösedrucks, d.h. des pneumatischen Bediensignals, zusätzlich in Abhängigkeit der Vorsteuerventilanordnung erfolgen.

Bevorzugt weist die Vorsteuerventilanordnung ein Bistabilventil und/oder ein monostabiles Halteventil auf. Bevorzugt ist das Bistabilventil ein in Abhängigkeit eines ersten elektrischen Schaltsignals elektrisch steuerbares 3/2-Wege-Magnetventil. Bevorzugt ist das Bistabilventil permanentmagnetisch bistabil. Bevorzugt ist das Halteventil ein in Abhängigkeit eines zweiten elektrischen Schaltsignals elektrisch steuerbares 2/2-Wege-Magnetventil, das im nicht angesteuerten Zustand geöffnet ist.

Die Erfindung führt zur Lösung der Aufgabe in einem zweiten Aspekt auf einen Anhänger, bevorzugt für ein Nutzfahrzeug, aufweisend mindesten einen Feststellbremszylinder und ein elektropneumatisches Anhänger-Feststellbremssystem gemäß dem ersten Aspekt der Erfindung. In einer Weiterbildung des Anhängers ist vorgesehen, dass die Anhänger-Bedieneinheit am Anhänger angeordnet ist.

Die Erfindung führt zur Lösung der Aufgabe in einem dritten Aspekt auf ein Zuggespann mit einem Nutzfahrzeug und einem Anhänger gemäß dem zweiten Aspekt der Erfindung, wobei die Anhänger-Bedieneinheit am Nutzfahrzeug angeordnet ist.

Es soll verstanden werden, dass das elektropneumatische Anhänger-Feststellbremssystem gemäß dem ersten Aspekt der Erfindung, der Anhänger gemäß dem zweiten Aspekt der Erfindung und das Zuggespann gemäß dem dritten Aspekt der Erfindung gleiche und ähnliche Unteraspekte aufweisen, wie sie insbesondere in den abhängigen Ansprüchen niedergelegt sind. Insofern wird für die Weiterbildung eines Aspekts der Erfindung auch auf die Weiterbildungen der anderen Aspekte der Erfindung verwiesen.

Ausführungsformen der Erfindung werden nun nachfolgend anhand der Zeichnung im Vergleich zum Stand der Technik, welcher zum Teil ebenfalls dargestellt ist, beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1: eine erste bevorzugte Ausführungsform eines elektropneumatischen Anhänger-Feststellbremssystems,
- Fig. 2: eine zweite bevorzugte Ausführungsform eines elektropneumatischen Anhänger-Feststellbremssystems,
- Fig. 3: eine dritte bevorzugte Ausführungsform eines elektropneumatischen Anhänger-Feststellbremssystems,
- Fig. 4: eine vierte bevorzugte Ausführungsform eines elektropneumatischen Anhänger-Feststellbremssystems,
- Fig. 5: ein Zuggespann mit einem Anhänger, der ein elektropneumatischen Anhänger-Feststellbremssystem umfasst.

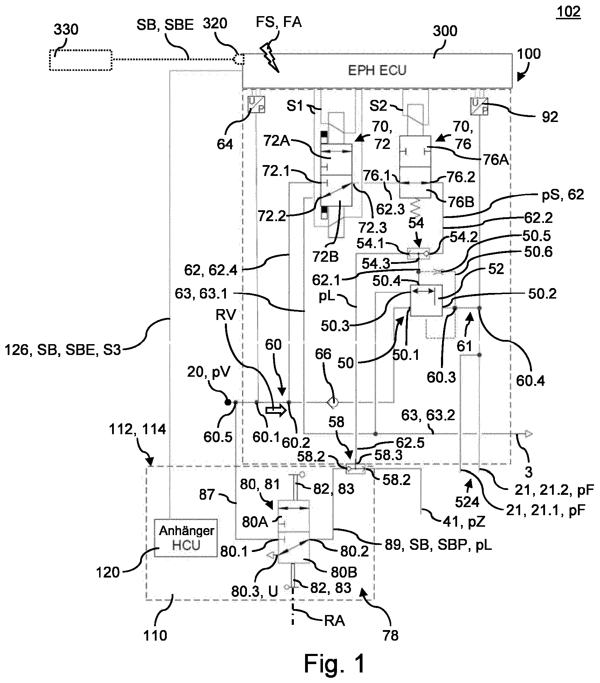

Fig. 1 zeigt eine erste bevorzugte Ausführungsform eines elektropneumatischen Anhänger-Feststellbremssystems 102 mit einem elektropneumatischen Anhänger-Feststellbremsmodul 100.

Ein Vorratsanschluss 20, an den sich eine Hauptleitung 60 anschließt, ist zum Empfangen eines Vorratsdrucks pV für das elektropneumatische Anhänger-Feststellbremsmodul 100 ausgebildet. Weiter entlang der Hauptleitung 60 in einer Versorgungsrichtung RV ist über einen ersten Hauptleitungsabzweig 60.1 ein Drucksensor 64 pneumatisch mit der Hauptleitung und somit dem Vorratsanschluss 20 zum Bestimmen des Vorratsdrucks pV verbunden.

Weiter entlang der Hauptleitung 60 in der Versorgungsrichtung RV ist über einen zweiten Hauptleitungsabzweig 60.2 eine elektropneumatische Vorsteuerventilanordnung 70 pneumatisch mit der Hauptleitung 60 verbunden. Weiter entlang der Hauptleitung 60 in der Versorgungsrichtung RV ist ein Hauptleitungs-Rückschlagventil 66 angeordnet, welches ausgebildet ist, sich in Versorgungsrichtung, d. h. in Richtung einer vom Vorratsanschluss 20 in die Hauptleitung 60 strömenden Druckluft, zu öffnen und in Gegenrichtung zu sperren. Durch das Hauptleitungs-Rückschlagventil 66 kann vorteilhaft ein Entweichen des Vorratsdrucks pV von einer Hauptventileinheit 50 verhindert werden, insbesondere im Fall eines Abrisses eines Vorrats-Kupplungskopfes.

An das Hauptleitungs-Rückschlagventil 66 schließt sich in der Versorgungsrichtung RV die Hauptventileinheit 50 mit einem Relaisventil 52 an, die über einen ersten Hauptventilanschluss 50.1 mit der Hauptleitung 60 verbunden ist. Das Relaisventil 52 ist ausgebildet, durch eine Druckbeaufschlagung eines Steueranschlusses 50.4 mit einem Steuerdruck pS den ersten Hauptventilanschluss 50.2 und einen zweiten Hauptventilanschluss 50.2 pneumatisch zu verbinden, um so am zweiten Hauptventilanschluss 50.2 in Abhängigkeit des Steuerdrucks pS einen Federspeicherdruck pF auszusteuern. Der zweite Hauptventilanschluss 50.2 ist wiederum mit einem zweiten Hauptleitungsabschnitt 61 der Hauptleitung 60 verbunden.

Der zweite Hauptventilanschluss 50.2 ist über einen dritten Hauptleitungsabzweig 60.3 und einen pneumatischen Selbsthaltepfad 50.6, der eine Drossel 50.5 aufweist, mit dem Steueranschluss 50.4 pneumatisch verbunden. Die pneumatische Verbindung ist durch die Drossel 50.5 mit relativ kleiner Nennweite ausgebildet, bei einem leckagebedingten Abfallen des Druckes am Steueranschluss 50.4, diesen durch ein relativ langsames Nachströmen wieder auf das Niveau des ausgesteuerten Federspeicherdrucks pF anzugleichen.

Über einen vierten Hauptleitungsabzweig 60.4 ist der zweite Hauptleitungsabschnitt 61 mit einem weiteren Drucksensor 92 zum Bestimmen des Federspeicherdrucks pF verbunden. Der zweite Hauptleitungsabschnitt 61 ist - zum Bereitstellen des Federspeicherdrucks pF - mit einem Feststellbremsanschluss 21, vorliegend mit einem ersten Feststellbremsanschluss 21.1 und einem zweiten Feststellbremsanschluss 21.2, verbunden.

Von dem zweiten Hauptleitungsabzweig 60.2 verbindet ein vierter Steuerleitungsabschnitt 62.4 einen Vorsteuerpfad 62 die Hauptleitung 60 mit einem ersten Bistabilventilanschluss 72.1 eines Bistabilventils 72 der Vorsteuerventilanordnung 70.

Das Bistabilventil 72 der Vorsteuerventilanordnung 70 ist als bistabiles 3/2-Wege-Magnetventil ausgebildet, welches vorliegend in einer Entlüftungsstellung 72B gezeigt ist, in dem ein dritter Bistabilventilanschluss 72.3 zum Entlüften des Vorsteuerpfads 62 pneumatisch mit dem zweiten Bistabilventilanschluss 72.2 verbunden ist. Das Bistabilventil 72 ist ausgebildet, in einer - hier nicht eingelegten - Belüftungsstellung 72A eine pneumatische Verbindung zwischen dem ersten Bistabilventilanschluss 72.1 und dem dritten Bistabilventilanschluss 72.3 zum Bereitstellen des Vorratsdrucks pV im Vorsteuerpfad 62 herzustellen. Das Bistabilventil 72 ist in Abhängigkeit eines ersten elektrischen Schaltsignals S1 zwischen der Belüftungsstellung 72A und der Entlüftungsstellung 72B umschaltbar.

Die Vorsteuerventilanordnung 70 weist ein Halteventil 76 auf. Der dritte Bistabilventilanschluss 72.3 ist über einen dritten Steuerleitungsabschnitt 62.3 der Vorsteuerpfad 62 an einen ersten Halteventilanschluss 76.1 des Halteventils 76 angeschlossen. Die Vorsteuerventilanordnung 70 kann als bauliche Einheit ausgebildet sein, gleichwohl ist es aber auch möglich, dass das Bistabilventil 72 und das Halteventil 76 als unabhängige Komponenten ausgebildet sind.

Das Halteventil 76 ist vorliegend als stromlos geöffnetes, 2/2-Wege-Magnetventil ausgebildet und vorliegend in seiner Lösestellung 76B gezeigt, in der der erste Halteventilanschluss 76.1 mit einem zweiten Halteventilanschluss 76.2 pneumatisch verbunden ist. In einer Haltestellung 76A, die dann vorliegt, wenn das Halteventil 76 bestromt wird, das heißt wenn ein zweites elektrisches Schaltsignal S2 anliegt, ist die pneumatische Verbindung zwischen dem ersten Halteventilanschluss 76.1 und einem zweiten Halteventilanschluss 76.2 getrennt. Das Halteventil 76 ist monostabil und schaltet im nicht angesteuerten Zustand, das heißt wenn kein zweites elektrisches Schaltsignal S2 anliegt, selbstständig in die Lösestellung 76B.

An den zweiten Halteventilanschluss 76.2 ist ein zweiter Steuerleitungsabschnitt 62.2 des Vorsteuerpfads 62 angeschlossen. Der zweite Steuerleitungsabschnitt 62.2 ist wiederum mit einem zweiten Wechselventilanschluss 54.2 eines Select-High-Wechselventils 54 pneumatisch verbunden.

An den dritten Wechselventilanschluss 54.3 ist ein erster Steuerleitungsabschnitt 62.1 des Vorsteuerpfads 62 angeschlossen, welcher wiederum mit dem Steueranschluss 50.4 des Relaisventils 52 pneumatisch verbunden ist. Über das Beaufschlagen des Steueranschlusses 50.4 kann das Relaisventil 52 - zum Aussteuern des Federspeicherdrucks pF am dritten Hauptventilanschluss 50.3 - aktuiert werden.

Mit dem Select-High-Wechselventil 54 in der hier gezeigten Ausbildung wird stets derjenige vom ersten und zweiten Wechselventilanschluss 54.1, 54.2, an dem der höhere Druck herrscht, mit dem dritten Wechselventilanschluss 54.3 pneumatisch verbunden. Dabei wird, gemäß der Funktionsweise eines Wechselventils, der jeweils andere Wechselventilanschluss 54.1, 54.2, durch den Ventilkörper gesperrt.

An den zweiten Bistabilventilanschluss 72.2 des Bistabilventils 72 ist ein erster Entlüftungsleitungsabschnitt 63.1 einer Entlüftungsleitung 63 angeschlossen. In einer Entlüftungsstellung 72B des Bistabilventils ist der dritte Bistabilventilanschluss 72.3 mit dem zweiten Bistabilventilanschluss 72.2 pneumatisch verbunden. In dieser Entlüftungsstellung 72B ist somit der dritte Steuerleitungsabschnitt 62.3 des Vorsteuerpfads 62 mit dem ersten Entlüftungsleitungsabschnitt 63.1 pneumatisch verbunden.

An den ersten Entlüftungsleitungsabschnitt 63.1 schließt sich zweiter Entlüftungsleitungsabschnitt 63.2 an, welcher wiederum mit einem Entlüftungsanschluss 3 des elektropneumatischen Anhänger-Feststellbremsmoduls 100 verbunden ist. Ein dritter Entlüftungsleitungsabschnitt 63.3 verbindet den ersten Hauptventilanschluss 50.1 der Hauptventileinheit 50 bzw. des Relaisventils 52 mit der Entlüftungsleitung 63 und folglich mit dem Entlüftungsanschluss 3.

Mit einem in Fig. 1 gezeigten System ist es möglich, eine Ausfallbremsfunktionalität bereitzustellen, das heißt eine Funktionalität zum Bremsen eines Fahrzeugs, falls ein Stromausfall oder ein Fehlersignal einer Steuereinheit 300 vorliegt. Das Bereitstellen der Ausfallbremsfunktionalität erfolgt über ein Vorhalten eines Steuerdrucks pS am Steueranschluss 50.4 des Relaisventils, mittels welchem mindestens ein Federspeicherbremszylinder 524 zum Lösen der Feststellbremse belüftet wird. Bei Auftreten einer Ausfallbremssituation, insbesondere falls ein Stromausfall oder ein Fehlersignal der elektronischen Steuereinheit 300 vorliegt, erfolgt entsprechend durch ein Entlüften des Steueranschlusses 50.4 ein Entlüften der Federspeicherbremszylinder 524 zum Aktivieren der Feststellbremse. Der Steuerdruck pS kann in Form des Zusatzsteuerdrucks pZ über einen Anti-Compound-Anschluss 41 bereitgestellt werden.

Das Entlüften des Steueranschlusses 50.4 kann über das Halteventil 76 ermöglicht werden, das im Fall eines Stromausfalls FS oder eines Fehlerfalls FA der elektronischen Steuereinheit 300 selbsttätig stromlos wird und öffnet.

Dadurch, dass ein Select-High-Wechselventil 54 vorgesehen ist, kann der Steueranschluss 50.4 des Relaisventils 52 auch dann belüftet, insbesondere mit einem Steuerdruck pS oder einem Zusatzsteuerdruck pZ oder einem Lösedruck pL, beaufschlagt werden, wenn das Bistabilventil 72 in der Entlüftungsstellung 72B ist.

Durch eine Kombination von Halteventil 76 und Select-High-Wechselventil 54 kann insbesondere der Steueranschluss 50.4 des Relaisventils 52 be- und entlüftet werden, ohne das Bistabilventil 72 in die Belüftungsstellung 72A schalten zu müssen.

Durch diese Kombination wird vorteilhaft eine Situation vermieden, in der ein Stromausfall oder ein Fehlersignal der Steuereinheit 300 zu einem Zeitpunkt auftritt, in dem sich das Bistabilventil 72 noch in der Belüftungsstellung 72A befindet und somit ein Entlüften des Steueranschlusses 50.4 zum Erzeugen einer Ausfallbremsung nicht möglich wäre, weil in diesem Fall keine pneumatische Verbindung zwischen dem Steueranschluss 50.4 und dem Entlüftungsanschluss 3 hergestellt werden könnte.

Durch das Select-High-Wechselventil 54 kann eine weitere, alternative Druckluftquelle zum Aktuieren des Relaisventils 52 an den Steueranschluss 50.4 angeschlossen werden. Hierfür ist vorliegend ein Anti-Compound-Anschluss 41 über einen fünften Steuerleitungsabschnitt 62.5 mit dem ersten Wechselventilanschluss 54.1 pneumatisch verbunden.

Der fünfte Steuerleitungsabschnitt 62.5 verbindet den ersten Wechselventilanschluss 54.1 mit einem dritten Löseventilanschluss 58.3 eines Select-High-Löseventils 58.

Der Anti-Compound-Anschluss 41 zum Empfangen eines Zusatz-Steuerdrucks pZ ist pneumatisch mit einem zweiten Löseventilanschluss 58.2 verbunden. Ein erster Löseventilanschluss 58.1 ist zum Empfangen eines pneumatischen Bediensignals SBP in Form eines Lösedrucks pL über eine pneumatische Bedien-Steuerleitung 89 mit einem zweiten Ventilanschluss 80.2 eines manuell betätigbaren Ventils 80 verbunden.

Mit dem Select-High-Löseventil 58 wird stets derjenige vom ersten und zweiten Löseventilanschluss 58.1, 58.2, an dem der höhere Druck herrscht, mit dem dritten Löseventilanschluss 58.3 pneumatisch verbunden. Dabei wird, gemäß der Funktionsweise eines Wechselventils, der jeweils andere Löseventilanschluss 58.1, 58.2, durch den Ventilkörper gesperrt.

Gemäß dem Konzept der Erfindung weist das elektropneumatische Anhänger-Feststellbremsmodul 100 eine Anhänger-Bedieneinheit 110 auf. Die Anhänger-Bedieneinheit 110 ist als eine Baueinheit 112 mit einem Gehäuse 114 ausgebildet, das sowohl ein elektronisches Bedienelement 120, als auch ein pneumatisches Bedienelement 78 mit einem manuell betätigbaren Ventil 80 umfasst.

Das elektronische Bedienelement 120 ist zum Bereitstellen eines Bediensignals SB, nämlich eines elektrischen Bediensignals SBE in Form eines dritten elektrischen Schaltsignals S3, über eine elektrische Bedien-Steuerleitung 126 signalführend mit der elektronischen Steuereinheit 300 des elektropneumatischen Anhänger-Feststellbremsmoduls 100 verbunden.

Das manuell betätigbare Ventil 80 des pneumatischen Bedienelements 78 ist als ein 3/2-Wegeventil 81 ausgebildet, welches über ein manuelles Betätigungsmittel 82, das vorliegend als Zug-Druck-Element 83 ausgebildet ist, zwischen einer ersten Ventilstellung 80A und einer zweiten Ventilstellung 80B umschaltbar ist. Das Zug-Druck-Element 83 ist ein händisch verstellbarer Schalter, welcher mittels einer Zug- oder einer Druckbewegung in einer axialen Richtung RA zum Schalten des manuell betätigbaren Ventils 80 bewegt werden kann.

Das manuell betätigbare Ventil 80 weist einen ersten Ventilanschluss 80.1 auf, der über eine pneumatische Bedien-Versorgungsleitung 87 mit einem fünften Hauptleitungsabzweig 60.5 der pneumatischen Hauptleitung 60 verbunden ist. Der fünfte Hauptleitungsabzweig 60.5 ist in der Hauptleitung 60 zwischen dem Vorratsanschluss 20 und dem ersten Hauptleitungsabzweig 60.1 angeordnet. Das manuell betätigbare Ventil 80 weist einen Entlüftungsanschluss 80.3 auf, der in eine Umgebung U entlüftet.

In der ersten Ventilstellung 80A ist der erste Ventilanschluss 80.1 pneumatisch mit dem zweiten Ventilanschluss 80.2 verbunden, sodass der Vorratsdruck pV als Lösedruck pL über die pneumatische Bedien-Steuerleitung 89, sowie den fünften und ersten Steuerleitungsabschnitt 62.5, 62.1 am Steueranschluss 50.4 bereitgestellt wird.

In der zweiten Ventilstellung 80B ist der zweite Ventilanschluss 80.2 mit dem Entlüftungsanschluss 80.3 verbunden, sodass der Steueranschluss 50.4 nicht mit dem Lösedruck pL beaufschlagt und insbesondere entlüftet ist.

Durch ein Schalten in die erste Ventilstellung 80A kann das Anhänger-Feststellbremssystem 102 in einen gelösten Zustand, zum Bewegen eines hier nicht dargestellten Anhängers 201, überführt werden. Durch ein Schalten in die zweite Ventilstellung 80B kann das Anhänger-Feststellbremssystem 102 in einen eingelegten Zustand überführt werden, in welchem der Anhänger 201 in einem gebremsten Zustand ist.

In optionalen Ausführungsformen kann die elektronische Steuereinheit 300, zusätzlich oder alternativ zu dem elektronischen Bedienelement 120, eine drahtgebundene oder eine drahtlose elektrische oder elektronische Schnittstelle 320 aufweisen, die zum Empfangen eines elektrischen Bediensignals SBE von einem weiteren elektrischen oder elektronischen Steuergerät 330 ausgebildet ist. Das weitere elektronische Steuergerät 330 kann bevorzugt in einem als Nutzfahrzeug 202 ausgebildeten Zugfahrzeug angeordnet sein. In anderen Ausführungsformen kann das elektronische Steuergerät 330 anders, beispielsweise als mobiles Endgerät, ausgebildet sein.

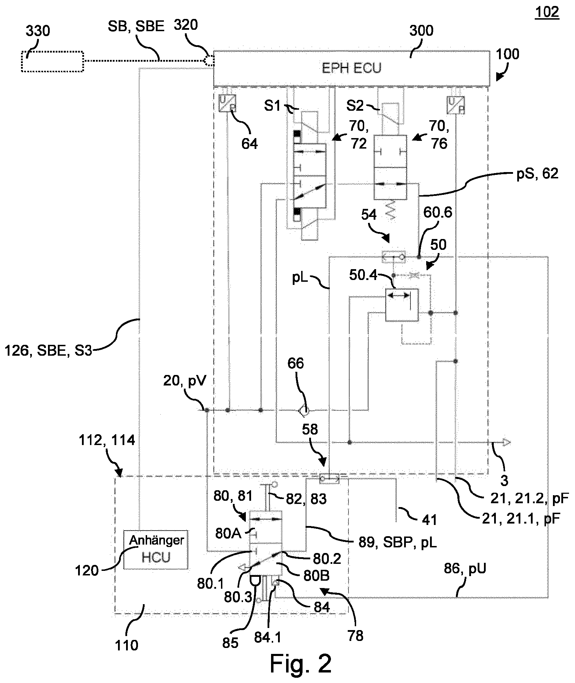

In Fig. 2, Fig. 3 und Fig. 4 sind weitere bevorzugte Ausführungsformen der Erfindung gezeigt, wobei für identische oder ähnliche Teile der Ausführungsformen auf die Beschreibungen zur Fig. 1 verwiesen und insbesondere auf Wiederholungen verzichtet wird.

In Fig. 2 ist eine weitere bevorzugte Ausführungsform eines elektropneumatischen Anhänger-Feststellbremssystems 102 gezeigt. Im Vergleich zu der in Fig. 1 gezeigten Ausführungsform weist in dem hier gezeigten Anhänger-Feststellbremsmodul 100 das manuell betätigbare Ventil 80 ein pneumatisches Betätigungsmittel 84 auf. Durch das pneumatische Betätigungsmittel 84 kann das manuell betätigbare Ventil 80 - zusätzlich zum manuellen Betätigungsmittel 82 - pneumatisch geschaltet werden. Das pneumatische Betätigungsmittel 84 weist einen pneumatischen Schalteingang 84.1 zum Empfangen eines Umschaltdrucks pU auf. Der pneumatischen Schalteingang 84.1 ist über einen pneumatischen Schaltpfad 86 an einem sechsten Hauptleitungsabzweig 60.6 mit dem Vorsteuerpfad 62 verbunden. Somit kann ein im Vorsteuerpfad 62 herrschender Steuerdruck pS als Umschaltdruck pU am pneumatischen Schalteingang 84.1 bereitgestellt werden. Der sechste Hauptleitungsabzweig 60.6 ist im Vorsteuerpfad 62 zwischen dem Halteventil 76 und dem Select-High-Wechselventil 54 angeordnet. Bei Vorliegen eines Umschaltdrucks pU am pneumatischen Schalteingang 84.1 schaltet das manuell betätigbare Ventil 80 in die zweite Ventilstellung 80B. Mittels des pneumatischen Betätigungsmittels 84 kann das manuell betätigbare Ventil 80 vorteilhaft - zusätzlich zur manuellen Betätigung - pneumatisch betätigt werden.

Vorteilhaft weist das manuell betätigbare Ventil 80 ein Anzeigemittel 85 auf, das ausgebildet ist, die aktuelle Ventilstellung 80A, 80B des manuell betätigbaren Ventils 80 anzuzeigen. Das Anzeigemittel 85 kann als mechanische Anzeige, beispielsweise mit einem Schiebestift, Drehanzeiger oder dergleichen, bevorzugt gut erkennbaren Anzeige, gebildet sein.

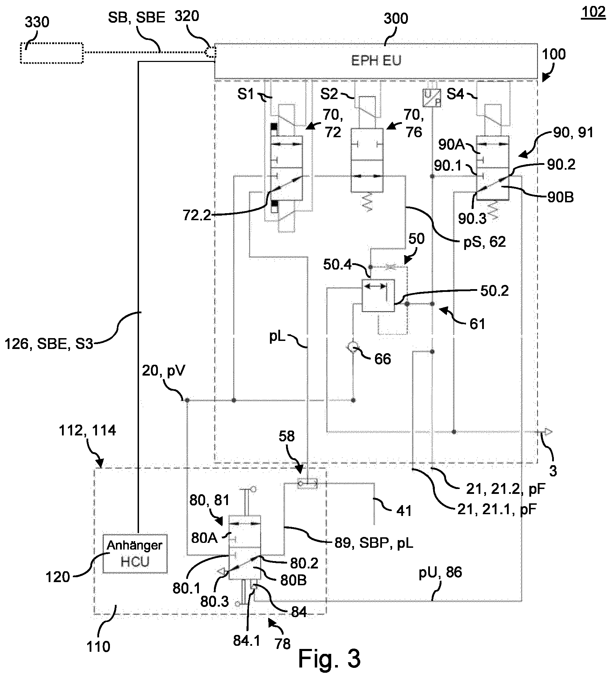

Fig. 3 zeigt eine dritte bevorzugte Ausführungsform eines elektropneumatischen Anhänger-Feststellbremsmoduls 100. Im Unterschied zu der in Fig. 2 gezeigten zweiten Ausführungsform weist das hier dargestellte elektropneumatische Anhänger-Feststellbremsmodul 100 im pneumatischen Schaltpfad 86 ein elektrisch steuerbares Schaltventil 90 zum steuerbaren Verbinden und Unterbrechen des pneumatischen Schaltpfades 86 auf. Das elektrisch steuerbare Schaltventil 90 ist als 3/2-Wegeventil 91 mit einem ersten Schaltventilanschluss 90.1, einem zweiten Schaltventilanschluss 90.2 und einem dritten Schaltventilanschluss 90.3 ausgebildet. Als weiterer Unterschied zu der in Fig. 2 gezeigten zweiten Ausführungsform ist vorliegend der pneumatische Schaltpfad 86 nicht mit dem Vorsteuerpfad 62, sondern mit dem Feststellbremsanschluss 21 bzw. dem zweiten Hauptventilanschluss 50.2 pneumatisch verbunden. Folglich wird der Federspeicherdruck pF als Umschaltdruck pU am pneumatischen Schalteingang 84.1 bereitgestellt. Der dritte Schaltventilanschluss 90.3 ist pneumatisch mit dem Entlüftungsanschluss 3 des elektropneumatischen Anhänger-Feststellbremsmoduls 100 verbunden.

Das elektrisch steuerbare Schaltventil 90 ist in Abhängigkeit eines vierten elektrischen Schaltsignals S4 von der elektronischen Steuereinheit 300 zwischen einer ersten Schaltventilstellung 90A und einer zweiten Schaltventilstellung 90B umschaltbar. In der ersten Schaltventilstellung 90A ist der erste Schaltventilanschluss 90.1 mit dem zweiten Schaltventilanschluss 90.2 pneumatisch verbunden, sodass ein am zweiten Hauptventilanschluss 50.2 ausgesteuerter Federspeicherdruck PF als Umschaltdruck pF am pneumatischen Schalteingang 84.1 bereitgestellt wird. In der zweiten Schaltventilstellung 90B ist der zweite Schaltventilanschluss 90.2 mit dem dritten Schaltventilanschluss 90.3 pneumatisch verbunden, sodass der pneumatische Schalteingang 84.1 über den Entlüftungsanschluss 3 entlüftet wird.

Als weiterer Unterschied zu der in Fig. 2 gezeigten zweiten Ausführungsform ist vorliegend der zweite Ventilanschluss 80.2 des manuell betätigbaren Ventils 80 über die Vorsteuerventilanordnung 70 pneumatisch mit dem Steueranschluss 50.4 verbunden. Der zweite Ventilanschluss 80.2 ist mit dem zweiten Bistabilventilanschluss 72.2 verbunden. Folglich wird der Lösedruck pL über das Bistabilventil 72 und das Halteventil 76 an den Steueranschluss 50.4 geleitet, wenn das manuell betätigbare Ventil 80 in seiner ersten Ventilstellung 80A ist. Auch kann der Steueranschluss 50.4 über diesen Pfad entlüften werden, wenn das manuell betätigbare Ventil 80 in seiner zweiten Ventilstellung 80B ist.

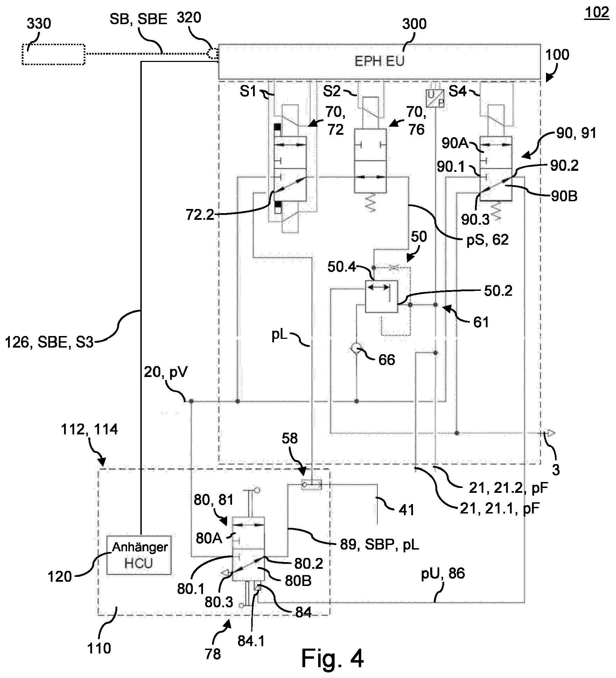

Fig. 4 zeigt eine vierte bevorzugte Ausführungsform eines elektropneumatischen Anhänger-Feststellbremsmoduls 100, bei dem im Vergleich zu der vorhergehend gezeigten dritten Ausführungsform das elektrisch steuerbare Schaltventil 90 mit der pneumatischen Hauptleitung 60 und somit dem Vorratsanschluss 20 verbunden ist. Folglich wird der Vorratsdruck pV als Umschaltdruck pU am pneumatischen Schalteingang 84.1 bereitgestellt, und zwar in Abhängigkeit des vierten elektrischen Schaltsignals S4. Es ist folglich eine Bereitstellung des Umschaltdrucks pU möglich, die im Wesentlichen unabhängig von der Vorsteuerventilanordnung 70 ist.

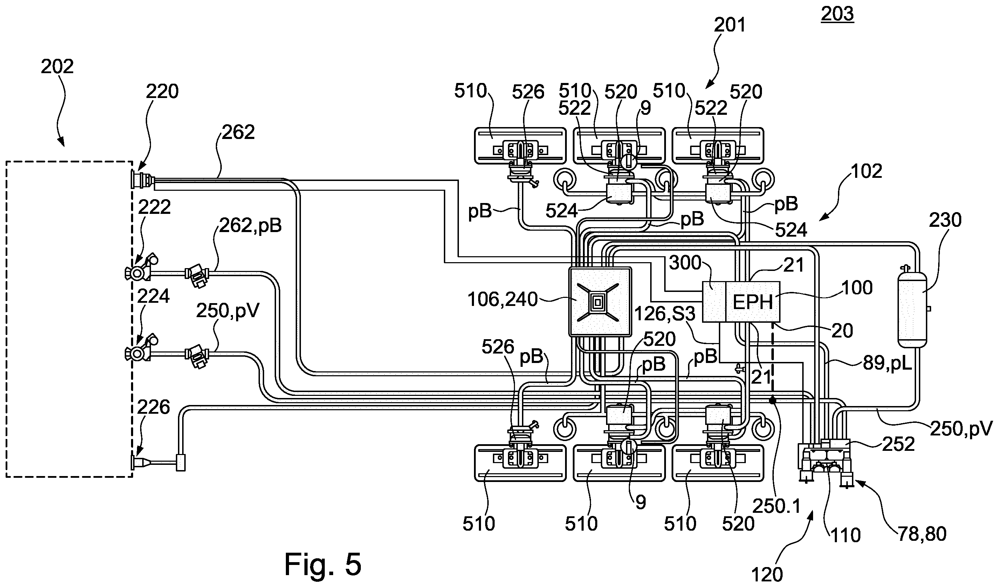

Fig. 5 zeigt schematisch ein Zuggespann 203 mit einem Nutzfahrzeug 202 als Zugfahrzeug und einem Anhänger 201. Der Anhänger 201 weist ein elektropneumatisches Anhänger-Feststellbremssystem 102 mit einem elektropneumatischen Anhänger-Feststellbremsmoduls 100 auf.

Der Anhänger 201 umfasst einen Vorrats-Kupplungskopf 224 zum Anschließen einer pneumatischen Anhänger-Vorratsleitung 250 des Anhängers 201 an eine hier nicht dargestellte Druckluftversorgungsanlage des Nutzfahrzeugs 202 zum Bereitstellen von Druckluft. Über die Anhänger-Vorratsleitung 250 werden die pneumatischen Verbraucher des Anhängers 201, insbesondere das Anhänger-Feststellbremssystem 102 und ein Anhänger-Betriebsbremssystem 106, mit dem Vorratsdruck pV versorgt. An einem ersten Anhänger-Vorratsleitungsabzweig 250.1 ist die Anhänger-Vorratsleitung 250 mit einem Vorratsanschluss 20 des elektropneumatischen Anhänger-Feststellbremsmoduls 100 verbunden, um dieses mit dem Vorratsdruck pV zu versorgen. Durch eine derartige, direkte Verbindung des elektropneumatischen Anhänger-Feststellbremsmoduls 100 mit dem Vorrats-Kupplungskopf 224, insbesondere ohne Rückschlagventil oder dergleichen, wird vorteilhaft gewährleistet, dass bei einem Abriss des Vorrats-Kupplungskopfes 224, und insbesondere zusätzlich eines Steuerung-Kupplungskopfes 220, als Sicherheitsmaßnahme der Druck am Vorratsanschluss 20 abfällt und somit für ein Einfallen der Federspeicherbremszylinder 524 der Steueranschluss 50.4 der Hauptventileinheit 50 entlüftet wird. Die Anhänger-Vorratsleitung 250 ist weiter pneumatisch mit einem Druckluftvorrat 230 und weiter mit einem Anhänger-Betriebsbremsmodul 240 verbunden.

Der Anhänger 201 umfasst einen Betriebsbrems-Kupplungskopf 222 zum Anschließen einer pneumatischen Betriebsbrems-Leitung 260 an ein hier nicht dargestelltes Betriebsbremssystem des Nutzfahrzeugs 202 zum Empfangen eines Betriebsbremsdrucks pB. Der Betriebsbremsdruck pB wird, insbesondere als Steuerdruck, an das Anhänger-Betriebsbremsmodul 240 bereitgestellt.

Der Steuerungs-Kupplungskopf 220 ist zum Anschließen mindestens einer elektrischen Anhänger-Steuerungsleitung 262 an mindestens eine, hier nicht dargestellte elektrische Fahrzeug-Steuereinheit des Nutzfahrzeugs 202 ausgebildet. Über den Steuerungs-Kupplungskopf 220 können somit eine Anzahl von elektrischen oder signaltechnischen Quellen mit einer Anzahl an elektrischen oder signaltechnischen Empfängern verbunden werden um beispielsweise eine Spannungsversorgung des Anhängers 201 oder einen Signalaustausch für Bremslichter, das Betriebsbremssystem oder weitere Fahrzeugsysteme zu ermöglichen. Insbesondere können über den Steuerungs-Kupplungskopf 220 elektrische Signale an das Anhänger-Betriebsbremsmodul 240 und/oder an die elektrische Steuereinheit 300 des elektropneumatischen Anhänger-Feststellbremsmoduls 100 bereitgestellt und/oder von diesen empfangen werden.

Das Zuggespann 203 kann weitere Kupplungsköpfe aufweisen, wie hier einen zusätzlichen elektrischen Versorgung-Kupplungskopf 226 zur Versorgung des Anhänger-Betriebsbremsmoduls 240.

Der Anhänger 201 weist eine Anzahl von sechs Rädern 510 auf, wobei zwei Rädern 510 jeweils ein Betriebsbremszylinder 526 zugeordnet ist und vier Rädern 510 jeweils ein Kombinationsbremszylinder 520. Ein Kombinationsbremszylinder 520 weist jeweils eine Betriebsbremskammer 522, die pneumatisch mit dem Anhänger-Betriebsbremsmodul 240 verbunden ist, und eine Federspeicher-Bremskammer 524 auf, die pneumatisch mit dem Anhänger-Feststellbremsmodul 100 verbunden ist. Gleichwohl kann das elektropneumatische Anhänger-Feststellbremssystem 102 anstelle von einem Kombinationsbremszylinder 520 auch einen Federspeicherbremszylinder 524 aufweisen.

Das elektropneumatische Anhänger-Feststellbremssystem 102 weist eine Anhänger-Bedieneinheit 110 gemäß dem Konzept der Erfindung auf. Die Anhänger-Bedieneinheit 110 umfasst ein elektronisches Bedienelement 120 zum Bereitstellen eines dritten elektrischen Schaltsignals S3 an die elektronische Steuereinheit 300 des elektropneumatischen Anhänger-Feststellbremsmoduls 100. Die Anhänger-Bedieneinheit 110 umfasst weiter ein manuell betätigbares Ventil 80 zum Bereitstellen eines Lösedrucks pL an das elektropneumatische Anhänger-Feststellbremsmodul 100.

Optional kann die Anhänger-Bedieneinheit 110 wie hier gezeigt weitere pneumatische Ventilelemente aufweisen, beispielsweise ein Rückschlagventil 252 für die Anhänger-Vorratsleitung 250 zur Absicherung des Druckvorratsbehälters 230, insbesondere bei einem Abriss des Vorrats-Kupplungskopfes 224.

### Bezugszeichenliste (Teil der Beschreibung)

3 Entlüftungsanschluss
20 Vorratsanschluss
21 Feststellbremsanschluss
41 Anti-Compound-Anschluss, Zusatz-Bremsdruckanschluss
50 Hauptventileinheit
50.1-50.3 erster bis dritter Hauptventilanschluss
50.4 Steueranschluss
50.5 Drossel
50.6 pneumatischer Selbsthaltepfad
52 Relaisventil
54 Select-High-Wechselventil
54.1-54.3 erster bis dritter Wechselventilanschluss des Select-High-Wechselventils
58 Select-High-Löseventil
58.1-58.3 erster bis dritter Löseventilanschluss des Select-High-Löseventils
60 Hauptleitung
60.1-60.6 erster bis sechster Hauptleitungsabzweig
61 zweiter Hauptleitungsabschnitt
62 Vorsteuerpfad
62.1-62.5 erster bis fünfter Steuerleitungsabschnitt
63 Entlüftungsleitung
63.1-63.3 erster bis dritter Entlüftungsleitungsabschnitt
64 Drucksensor
66 Hauptleitungs-Rückschlagventil
70 Vorsteuerventilanordnung
72 Bistabilventil
72.1-72.3 erster bis dritter Bistabilventilanschluss
72A Belüftungsstellung des Bistabilventils
72B Entlüftungsstellung des Bistabilventils
76 Halteventil
76.1, 76.2 erster, zweiter Halteventilanschluss
76A Haltestellung des Halteventils
76B Lösestellung des Halteventils
78 pneumatisches Bedienelement
80 manuell betätigbares Ventil
80.1 erster Ventilanschluss des manuell betätigbaren Ventils
80.2 zweiter Ventilanschluss des manuell betätigbaren Ventils
80.3 Entlüftungsanschluss des manuell betätigbaren Ventils
80A erste Ventilstellung des manuell betätigbaren Ventils
80B zweite Ventilstellung des manuell betätigbaren Ventils
81 3/2-Wegeventil
82 manuelles Betätigungsmittel
83 Zug-Druck-Element
84 pneumatisches Betätigungsmittel
84.1 pneumatischer Schalteingang
85 Anzeigemittel
86 pneumatischer Schaltpfad
87 pneumatische Bedien-Versorgungsleitung
89 pneumatische Bedien-Steuerleitung
90 elektrisch steuerbares Schaltventil
90.1-90.3 erster bis dritter Schaltventilanschluss
90A erste Schaltventilstellung
90B zweite Schaltventilstellung
91 3/2-Wegeventil
92 weiterer Drucksensor
100 elektropneumatisches Anhänger-Feststellbremsmodul
102 elektropneumatisches Anhänger-Feststellbremssystem
106 Anhänger-Betriebsbremssystem
110 Anhänger-Bedieneinheit
112 Baueinheit
114 Gehäuse
120 elektronisches Bedienelement
126 elektrische Bedien-Steuerleitung
201 Anhänger
202 Nutzfahrzeug
203 Zuggespann
220 Steuerung-Kupplungskopf
222 Betriebsbrems-Kupplungskopf
224 Vorrats-Kupplungskopf
226 elektrischer Versorgungs-Kupplungskopf
230 Druckluftvorrat
240 Anhänger-Betriebsbremsmodul
250 pneumatische Anhänger-Vorratsleitung
250.1 Anhänger-Vorratsleitungsabzweig
252 Rückschlagventil
260 pneumatische Betriebsbrems-Leitung
262 Anhänger-Steuerungsleitung
300 elektronische Steuereinheit
320 elektrische Schnittstelle
330 weiteres elektronisches Steuergerät
510 Rad
520 Kombinationsbremszylinder
522 Betriebsbremskammer
524 Federspeicherbremskammer, Federspeicherbremszylinder
526 Betriebsbremszylinder
FA Fehlerfall
FS Stromausfall
pF Federspeicherdruck
pL Lösedruck
pS Steuerdruck
pU Umschaltdruck
pV Vorratsdruck
RA axiale Richtung
RV Versorgungsrichtung
SB Bediensignal
SBE elektrisches Bediensignal
SBP pneumatisches Bediensignal
U Umgebung

## Patentansprüche

1. Elektropneumatisches Anhänger-Feststellbremssystem (102) für einen Anhänger (201), das ein elektropneumatisches Anhänger-Feststellbremsmodul (100) umfasst, wobei das elektropneumatische Anhänger-Feststellbremsmodul (100) zum Lösen oder Einlegen des elektropneumatischen Anhänger-Feststellbremssystems (102) in Abhängigkeit von einem Bediensignal (SB) ausgebildet ist und aufweist:
einen Vorratsanschluss (20) zum Empfangen eines Vorratsdrucks (pV),
wenigstens einen Feststellbremsanschluss (21) zum Anschließen wenigstens eines Feststellbremszylinders (24),
eine den Vorratsdruck (pV) empfangende Hauptventileinheit (50), die dazu ausgebildet ist, in Abhängigkeit von einem an einem Steueranschluss (50.4) anliegenden Steuerdruck (pS) einen Federspeicherdruck (pF) an dem Feststellbremsanschluss (21) auszusteuern,
eine den Vorratsdruck (pV) empfangende Vorsteuerventilanordnung (70) zum Bereitstellen des Steuerdrucks (pS),
**gekennzeichnet durch**
eine elektronische Steuereinheit (300), die ausgebildet ist, das Bediensignal (SB) in Form eines elektrischen Bediensignals (SBE) zum Lösen oder Einlegen des elektropneumatischen Anhänger-Feststellbremssystems (102) zu empfangen und in Abhängigkeit des elektrischen Bediensignals (SBE) ein elektrisches Schaltsignal (S, S1, S2) an der Vorsteuerventilanordnung (70) bereitzustellen, wobei
die Vorsteuerventilanordnung (70) ausgebildet ist, in Abhängigkeit des elektrischen Schaltsignals (S, S1, S2) den Steuerdruck (pS) bereitzustellen, und
eine Anhänger-Bedieneinheit (110) zum Bereitstellen des Bediensignals (SB), wobei die Anhänger-Bedieneinheit (110) ein elektronisches Bedienelement (120) aufweist, das signalführend mit der elektrischen Steuereinheit (300) zum Bereitstellen des elektronischen Bediensignals (SBE) verbunden oder verbindbar ist und wobei die Anhänger-Bedieneinheit (110) ein pneumatisches Bedienelement (78) aufweist, das pneumatisch mit dem elektropneumatischen Anhänger-Feststellbremsmodul (100) zum Bereitstellen eines pneumatischen Bediensignals (SBP) verbunden oder verbindbar ist.

2. Elektropneumatisches Anhänger-Feststellbremssystem (102) nach Anspruch 1, **dadurch gekennzeichnet, dass**
das elektronische Bedienelement (120) einen Parkbremsschalter (122) umfasst.

3. Elektropneumatisches Anhänger-Feststellbremssystem (102) nach einem der vorherigen Ansprüche, **dadurch gekennzeichnet, dass**
das elektropneumatische Anhänger-Feststellbremssystem (102) einen Drucksensor (64) aufweist, der pneumatisch mit dem Vorratsanschluss (20) zum Erfassen des am Vorratsanschluss (20) ausgesteuerten Vorratsdrucks (pV) verbunden ist.

4. Elektropneumatisches Anhänger-Feststellbremssystem (102) nach einem der vorherigen Ansprüche, **dadurch gekennzeichnet, dass**
die Anhänger-Bedieneinheit (110) als eine, das elektronische Bedienelement (120) umfassende, Baueinheit (112) mit einem integralen oder modularen Gehäuse (114) ausgebildet ist.

5. Elektropneumatisches Anhänger-Feststellbremssystem (102) nach einem der vorherigen Ansprüche, **dadurch gekennzeichnet, dass**
das elektropneumatische Anhänger-Feststellbremssystem (102) und/oder das pneumatische Bedienelement (78) ein manuell betätigbares Ventil (80) zum Bereitstellen des pneumatischen Bediensignals (SBP) umfasst, wobei das manuell betätigbare Ventil (80) aufweist: ein manuelles Betätigungsmittel (82) zum Umschalten des manuell betätigbaren Ventils (80) mindestens zwischen einer ersten Ventilstellung (80A) und einer zweiten Ventilstellung (80B),
einen ersten Ventilanschluss (80.1), der zum Empfangen des Vorratsdrucks (pV) ausgebildet ist und einen zweiten Ventilanschluss (80.2), der zum Bereitstellen des pneumatischen Bediensignals (SBP) in Form eines Lösedrucks (pL) pneumatisch mit dem Steueranschluss (50.4) verbunden ist, wobei
in der ersten Ventilstellung (80A) des manuell betätigbaren Ventils (80) der erste Ventilanschluss (80.1) pneumatisch mit dem zweiten Ventilanschluss (80.2) verbunden ist zum Einsteuern des Vorratsdrucks (pV) als Lösedruck (pL) an den Steueranschluss (50.4).

6. Elektropneumatisches Anhänger-Feststellbremssystem (102) nach Anspruch 5, **dadurch gekennzeichnet, dass**
das manuell betätigbare Ventil (80) ein 3/2-Wege-Ventil (81) mit einem Entlüftungsanschluss (80.3) ist, der in die Umgebung (U) entlüftet, wobei
das 3/2-Wege-Ventil (81) zwischen der ersten Ventilstellung (80A) und der zweiten Ventilstellung (80B) umschaltbar ist, wobei in der ersten Ventilstellung (80A) der erste Ventilanschluss (80.1) pneumatisch mit dem zweiten Ventilanschluss (80.2) verbunden ist, und in der zweiten Ventilstellung (80B) der zweite Ventilanschluss (80.2) mit dem Entlüftungsanschluss (80.3) pneumatisch verbunden ist.

7. Elektropneumatisches Anhänger-Feststellbremssystem (102) nach einem der Ansprüche 5 oder 6, **dadurch gekennzeichnet, dass**
das manuelle Betätigungsmittel (82) ein Zug-Druck-Element (83) umfasst, das zur Betätigung des manuell betätigbaren Ventils (80) in eine axiale Richtung (RA) bewegt werden kann.

8. Elektropneumatisches Anhänger-Feststellbremssystem (102) nach einem der Ansprüche 5 bis 7, **dadurch gekennzeichnet, dass**
das manuell betätigbare Ventil (80) ein pneumatisches Betätigungsmittel (84) mit einem pneumatischen Schalteingang (84.1) zum Empfangen eines Umschaltdrucks (pU) über einen pneumatischen Schaltpfad (86) aufweist, wobei
das pneumatische Betätigungsmittel (84) zum Umschalten des manuell betätigbaren Ventils (80) mindestens von der ersten Ventilstellung (80A) in die zweite Ventilstellung (80B) in Abhängigkeit des Umschaltdrucks (pU) ausgebildet ist.

9. Elektropneumatisches Anhänger-Feststellbremssystem (102) nach Anspruch 8, **dadurch gekennzeichnet, dass**
der pneumatische Schaltpfad (86) mit einem Vorsteuerpfad (62) zum Empfangen des Steuerdrucks (pS) verbunden ist, wobei
der Vorsteuerpfad (62) die Vorsteuerventilanordnung (70) und den Steueranschluss (50.4) pneumatisch verbindet.

10. Elektropneumatisches Anhänger-Feststellbremssystem (102) nach Anspruch 8, **dadurch gekennzeichnet, dass**
im pneumatischen Schaltpfad (86) ein elektrisch steuerbares Schaltventil (90) zum steuerbaren Verbinden und Schließen des pneumatischen Schaltpfades (86) angeordnet ist, wobei
der pneumatische Schaltpfad (86) mit dem Feststellbremsanschluss (21) zum Empfangen des Federspeicherdrucks (pF) pneumatisch verbunden ist, oder
der pneumatische Schaltpfad (86) mit dem Vorratsanschluss (20) zum Empfangen des Vorratsdrucks (pV) pneumatisch verbunden ist.

11. Elektropneumatisches Anhänger-Feststellbremssystem (102) nach einem der Ansprüche 5 bis 10, **dadurch gekennzeichnet, dass**
der zweite Ventilanschluss (80.2) des manuell betätigbaren Ventils (80) über einen Anti-Compound-Anschluss (41) pneumatisch mit dem Steueranschluss (50.4) verbunden ist, und/oder
der zweite Ventilanschluss (80.2) über ein Select-High-Löseventil (58) pneumatisch mit dem Anti-Compound-Anschluss (41) verbunden ist, derart, dass derjenige von dem zweiten Ventilanschluss (80.2) und dem Anti-Compound-Anschluss (41) mit dem Steueranschluss (50.4) verbunden wird, an dem der höhere Druck anliegt.

12. Elektropneumatisches Anhänger-Feststellbremssystem (102) nach Anspruch 11, **dadurch gekennzeichnet, dass**
der zweite Ventilanschluss (80.2) des manuell betätigbaren Ventils (80) über die Vorsteuerventilanordnung (70) pneumatisch mit dem Steueranschluss (50.4) verbunden ist.

13. Elektropneumatisches Anhänger-Feststellbremssystem (102) nach einem der vorherigen Ansprüche, **dadurch gekennzeichnet, dass**
die Vorsteuerventilanordnung (70) ein Bistabilventil (72) aufweist.

14. Elektropneumatisches Anhänger-Feststellbremssystem (102) nach einem der vorherigen Ansprüche, **dadurch gekennzeichnet, dass**
die Vorsteuerventilanordnung (70) ein monostabiles, im nicht angesteuerten Zustand in eine Lösestellung (76B) schaltendes, Halteventil (76) aufweist.

15. Anhänger (201), bevorzugt für ein Nutzfahrzeug (202), aufweisend mindesten einen Feststellbremszylinder (520) und ein elektropneumatisches Anhänger-Feststellbremssystem (102) gemäß einem der vorherigen Ansprüche.

16. Anhänger (201) nach Anspruch 15, **dadurch gekennzeichnet, dass** die Anhänger-Bedieneinheit (110) am Anhänger (201) angeordnet ist.

17. Zuggespann (203) mit einem Nutzfahrzeug (202) und einem Anhänger nach Anspruch 15 oder 16, **dadurch gekennzeichnet, dass** die Anhänger-Bedieneinheit (110) am Nutzfahrzeug (202) angeordnet ist.

## Claims

1. Electropneumatic trailer parking brake system (102) for a trailer (201), which parking brake system comprises an electropneumatic trailer parking brake module (100), the electropneumatic trailer parking brake module (100) being designed to release or engage the electropneumatic trailer parking brake system (102) on the basis of an operating signal (SB) and having:
a supply port (20) for receiving a supply pressure (pV),
at least one parking brake port (21) for connecting at least one parking brake cylinder (24),
a main valve unit (50) which receives the supply pressure (pV) and is designed to modulate a spring accumulator pressure (pF) at the parking brake port (21) on the basis of a control pressure (pS) present at a control port (50.4),
a pilot control valve assembly (70) for providing the control pressure (pS), said pilot control valve assembly receiving the supply pressure (pV),
**characterized by**
an electronic control unit (300) designed to receive the operating signal (SB) in the form of an electrical operating signal (SBE) for releasing or engaging the electropneumatic trailer parking brake system (102) and to provide an electrical switching signal (S, S1, S2) to the pilot control valve assembly (70) on the basis of the electrical operating signal (SBE),
the pilot control valve assembly (70) being designed to provide the control pressure (pS) on the basis of the electrical switching signal (S, S1, S2), and
a trailer operating unit (110) for providing the operating signal (SB), the trailer operating unit (110) having an electronic operating element (120) which is connected or connectable, in a signal-conducting manner, to the electrical control unit (300) in order to provide the electronic operating signal (SBE), and the trailer operating unit (110) having a pneumatic operating element (78) which is pneumatically connected or connectable to the electropneumatic trailer parking brake module (100) in order to provide a pneumatic operating signal (SBP).

2. Electropneumatic trailer parking brake system (102) according to claim 1, **characterized in that**
the electronic operating element (120) comprises a parking brake switch (122).

3. Electropneumatic trailer parking brake system (102) according to either of the preceding claims, **characterized in that**
the electropneumatic trailer parking brake system (102) has a pressure sensor (64) which is pneumatically connected to the supply port (20) in order to detect the supply pressure (pV) modulated at the supply port (20).

4. Electropneumatic trailer parking brake system (102) according to any of the preceding claims, **characterized in that**
the trailer operating unit (110) is designed as a structural unit (112) comprising the electronic operating element (120) and having an integral or modular housing (114).

5. Electropneumatic trailer parking brake system (102) according to any of the preceding claims, **characterized in that**
the electropneumatic trailer parking brake system (102) and/or the pneumatic operating element (78) comprises a manually actuatable valve (80) for providing the pneumatic operating signal (SBP), the manually actuatable valve (80) having: a manual actuating means (82) for switching the manually actuatable valve (80) at least between a first valve position (80A) and a second valve position (80B),
a first valve port (80.1) designed to receive the supply pressure (pV), and a second valve port (80.2) pneumatically connected to the control port (50.4) in order to provide the pneumatic operating signal (SBP) in the form of a release pressure (pL),
the first valve port (80.1) being pneumatically connected to the second valve port (80.2) when the manually actuatable valve (80) is in the first valve position (80A), in order to introduce the supply pressure (pV) in a controlled manner as release pressure (pL) at the control port (50.4).

6. Electropneumatic trailer parking brake system (102) according to claim 5, **characterized in that**
the manually actuatable valve (80) is a 3/2-way valve (81) comprising a vent port (80.3) that vents to the surroundings (U),
the 3/2-way valve (81) being switchable between the first valve position (80A) and the second valve position (80B), the first valve port (80.1) being pneumatically connected to the second valve port (80.2) when the valve is in the first valve position (80A), and the second valve port (80.2) being pneumatically connected to the vent port (80.3) when the valve is in the second valve position (80B).

7. Electropneumatic trailer parking brake system (102) according to either of claims 5 and 6, **characterized in that**
the manual actuating means (82) comprises a pull-push element (83) which can be moved in an axial direction (RA) in order to actuate the manually actuatable valve (80).

8. Electropneumatic trailer parking brake system (102) according to any of claims 5 to 7, **characterized in that**
the manually actuatable valve (80) has a pneumatic actuating means (84) comprising a pneumatic switching input (84.1) for receiving a switching pressure (pU) via a pneumatic switching path (86),
the pneumatic actuating means (84) being designed to switch the manually actuatable valve (80) at least from the first valve position (80A) to the second valve position (80B) on the basis of the switching pressure (pU).

9. Electropneumatic trailer parking brake system (102) according to claim 8, **characterized in that**
the pneumatic switching path (86) is connected to a pilot control path (62) in order to receive the control pressure (pS),
the pilot control path (62) pneumatically connecting the pilot control valve assembly (70) and the control port (50.4).

10. Electropneumatic trailer parking brake system (102) according to claim 8, **characterized in that**
an electrically controllable switching valve (90) for the controllable connection and closure of the pneumatic switching path (86) is arranged in the pneumatic switching path (86),
the pneumatic switching path (86) being pneumatically connected to the parking brake port (21) in order to receive the spring accumulator pressure (pF), or
the pneumatic switching path (86) being pneumatically connected to the supply port (20) in order to receive the supply pressure (pV).

11. Electropneumatic trailer parking brake system (102) according to any of claims 5 to 10, **characterized in that**
the second valve port (80.2) of the manually actuatable valve (80) is pneumatically connected to the control port (50.4) via an anti-compound port (41), and/or
the second valve port (80.2) is pneumatically connected to the anti-compound port (41) via a select-high release valve (58) in such a way that the port with the higher pressure out of the second valve port (80.2) and the anti-compound port (41) is connected to the control port (50.4).

12. Electropneumatic trailer parking brake system (102) according to claim 11, **characterized in that**
the second valve port (80.2) of the manually actuatable valve (80) is pneumatically connected to the control port (50.4) via the pilot control valve assembly (70).

13. Electropneumatic trailer parking brake system (102) according to any of the preceding claims, **characterized in that**
the pilot control valve assembly (70) has a bistable valve (72).

14. Electropneumatic trailer parking brake system (102) according to any of the preceding claims, **characterized in that**
the pilot control valve assembly (70) has a monostable holding valve (76) which switches to a release position (76B) in the non-activated state.

15. Trailer (201), preferably for a commercial vehicle (202), said trailer having at least one parking brake cylinder (520) and an electropneumatic trailer parking brake system (102) according to any of the preceding claims.

16. Trailer (201) according to claim 15, **characterized in that** the trailer operating unit (110) is arranged on the trailer (201).

17. Towing combination (203) comprising a commercial vehicle (202) and a trailer according to claim 15 or 16, **characterized in that** the trailer operating unit (110) is arranged on the commercial vehicle (202).

## Revendications

1. Système de freinage de stationnement pour remorque électropneumatique (102) pour une remorque (201), lequel comprend un module de freinage de stationnement pour remorque électropneumatique (100), dans lequel le module de freinage de stationnement pour remorque électropneumatique (100) est conçu pour dégager ou engager le système de freinage de stationnement pour remorque électropneumatique (102) en fonction d'un signal de manipulation (SB) et présente :
un raccord de réserve (20) pour la réception d'une pression de réserve (pV),
au moins un raccord de freinage de stationnement (21) pour le raccordement d'au moins un cylindre de freinage de stationnement (24),
une unité formant soupape principale (50) recevant la pression de réserve (pV), laquelle unité formant soupape principale est conçue pour régler une pression d'accumulateur à ressort (pF) au niveau du raccord de freinage de stationnement (21) en fonction d'une pression de commande (pS) appliquée au niveau d'un raccord de commande (50.4),
un ensemble soupape pilote (70) recevant la pression de réserve (pV) pour la fourniture de la pression de commande (pS),
**caractérisé par**
une unité de commande électronique (300) qui est conçue pour recevoir le signal de manipulation (SB) sous forme de signal de manipulation électrique (SBE) pour le dégagement ou l'engagement du système de freinage de stationnement pour remorque électropneumatique (102) et pour fournir, en fonction du signal de manipulation électrique (SBE), un signal de commutation électrique (S, S1, S2) au niveau de l'ensemble soupape pilote (70), dans lequel
l'ensemble soupape pilote (70) est conçu pour fournir la pression de commande (pS) en fonction du signal de commutation électrique (S, S1, S2), et
une unité de manipulation pour remorque (110) pour la fourniture du signal de manipulation (SB), dans lequel l'unité de manipulation pour remorque (110) présente un élément de manipulation électronique (120) qui est connecté ou peut être connecté par transmission de signal à l'unité de commande électrique (300) pour la fourniture du signal de manipulation électronique (SBE) et dans lequel l'unité de manipulation pour remorque (110) présente un élément de manipulation pneumatique (78) qui est raccordé ou peut être raccordé pneumatiquement au module de freinage de stationnement pour remorque électropneumatique (100) pour la fourniture d'un signal de manipulation pneumatique (SBP).

2. Système de freinage de stationnement pour remorque électropneumatique (102) selon la revendication 1, **caractérisé en ce que**
l'élément de manipulation électronique (120) comprend un commutateur de frein de stationnement (122).

3. Système de freinage de stationnement pour remorque électropneumatique (102) selon l'une des revendications précédentes,
**caractérisé en ce que**
le système de freinage de stationnement pour remorque électropneumatique (102) présente un capteur de pression (64) qui est raccordé pneumatiquement au raccord de réserve (20) pour la détection de la pression de réserve (pV) commandée au niveau du raccord de réserve (20).

4. Système de freinage de stationnement pour remorque électropneumatique (102) selon l'une des revendications précédentes,
**caractérisé en ce que**
l'unité de manipulation pour remorque (110) est conçue sous forme d'unité structurale (112) comprenant l'élément de manipulation électronique (120) et comportant un boîtier (114) intégral ou modulaire.

5. Système de freinage de stationnement pour remorque électropneumatique (102) selon l'une des revendications précédentes, **caractérisé en ce que**
le système de freinage de stationnement pour remorque électropneumatique (102) et/ou l'élément de manipulation pneumatique (78) comprennent une soupape à actionnement manuel (80) pour la fourniture du signal de manipulation pneumatique (SBP), dans lequel la soupape à actionnement manuel (80) présente : un moyen d'actionnement manuel (82) pour la commutation de la soupape à actionnement manuel (80) au moins entre une première position de soupape (80A) et une seconde position de soupape (80B),
un premier raccord de soupape (80.1) qui est conçu pour recevoir la pression de réserve (pV) et un second raccord de soupape (80.2) qui est raccordé pneumatiquement au raccord de commande (50.4) pour la fourniture du signal de manipulation pneumatique (SBP) sous forme de pression de dégagement (pL), dans lequel
dans la première position de soupape (80A) de la soupape à actionnement manuel (80), le premier raccord de soupape (80.1) est raccordé pneumatiquement au second raccord de soupape (80.2) pour la commande de la pression de réserve (pV) sous forme de pression de dégagement (pL) au niveau du raccord de commande (50.4).

6. Système de freinage de stationnement pour remorque électropneumatique (102) selon la revendication 5, **caractérisé en ce que**
la soupape à actionnement manuel (80) est une soupape à 3/2 voies (81) comportant un raccord d'évacuation d'air (80.3) qui évacue l'air dans l'environnement (U), dans lequel
la soupape à 3/2 voies (81) peut être commutée entre la première position de soupape (80A) et la seconde position de soupape (80B), dans lequel, dans la première position de soupape (80A), le premier raccord de soupape (80.1) est raccordé pneumatiquement au second raccord de soupape (80.2), et dans la seconde position de soupape (80B), le second raccord de soupape (80.2) est raccordé pneumatiquement au raccord d'évacuation d'air (80.3).

7. Système de freinage de stationnement pour remorque électropneumatique (102) selon l'une des revendications 5 ou 6,
**caractérisé en ce que**
le moyen d'actionnement manuel (82) comprend un élément de traction-compression (83) qui peut être déplacé dans une direction axiale (RA) pour l'actionnement de la soupape à actionnement manuel (80).

8. Système de freinage de stationnement pour remorque électropneumatique (102) selon l'une des revendications 5 à 7,
**caractérisé en ce que**
la soupape à actionnement manuel (80) présente un moyen d'actionnement pneumatique (84) comportant une entrée de commutation pneumatique (84.1) pour la réception d'une pression de commutation (pU) par l'intermédiaire d'un chemin de commutation pneumatique (86), dans lequel
le moyen d'actionnement pneumatique (84) est conçu pour commuter la soupape à actionnement manuel (80) au moins de la première position de soupape (80A) à la seconde position de soupape (80B) en fonction de la pression de commutation (pU).

9. Système de freinage de stationnement pour remorque électropneumatique (102) selon la revendication 8, **caractérisé en ce que**
le chemin de commutation pneumatique (86) est raccordé à un chemin pilote (62) pour la réception de la pression de commande (pS), dans lequel
le chemin pilote (62) raccorde pneumatiquement l'ensemble soupape pilote (70) et le raccord de commande (50.4).

10. Système de freinage de stationnement pour remorque électropneumatique (102) selon la revendication 8, **caractérisé en ce que**
une soupape de commutation à commande électrique (90) est disposée dans le chemin de commutation pneumatique (86) pour le raccordement et la fermeture de manière commandée du chemin de commutation pneumatique (86), dans lequel
le chemin de commutation pneumatique (86) est raccordé pneumatiquement au raccord de freinage de stationnement (21) pour la réception de la pression d'accumulateur à ressort (pF), ou
le chemin de commutation pneumatique (86) est raccordé pneumatiquement au raccord de réserve (20) pour la réception de la pression de réserve (pV).

11. Système de freinage de stationnement pour remorque électropneumatique (102) selon l'une des revendications 5 à 10,
**caractérisé en ce que**
le second raccord de soupape (80.2) de la soupape à actionnement manuel (80) est raccordé pneumatiquement au raccord de commande (50.4) par l'intermédiaire d'un raccord à non-addition d'efforts de freinage (41), et/ou
le second raccord de soupape (80.2) est raccordé pneumatiquement au raccord à non-addition d'efforts de freinage (41) par l'intermédiaire d'une soupape de dégagement à sélection haute (58), de telle sorte que le raccord au niveau duquel est appliquée la pression la plus élevée parmi le second raccord de soupape (80.2) et le raccord à non-addition d'efforts de freinage (41) est raccordé au raccord de commande (50.4).

12. Système de freinage de stationnement pour remorque électropneumatique (102) selon la revendication 11, **caractérisé en ce que**
le second raccord de soupape (80.2) de la soupape à actionnement manuel (80) est raccordé pneumatiquement au raccord de commande (50.4) par l'intermédiaire de l'ensemble soupape pilote (70).

13. Système de freinage de stationnement pour remorque électropneumatique (102) selon l'une des revendications précédentes,
**caractérisé en ce que** l'ensemble soupape pilote (70) présente une soupape bistable (72).

14. Système de freinage de stationnement pour remorque électropneumatique (102) selon l'une des revendications précédentes, **caractérisé en ce que**
l'ensemble soupape pilote (70) présente une soupape de retenue (76) monostable, commutant dans une position de dégagement (76B) à l'état non commandé.

15. Remorque (201), de préférence pour un véhicule utilitaire (202), présentant au moins un cylindre de freinage de stationnement (520) et un système de freinage de stationnement pour remorque électropneumatique (102) selon l'une des revendications précédentes.

16. Remorque (201) selon la revendication 15, **caractérisée en ce que** l'unité de manipulation pour remorque (110) est disposée sur la remorque (201).

17. Combinaison de remorquage (203) comportant un véhicule utilitaire (202) et une remorque selon la revendication 15 ou 16, **caractérisée en ce que** l'unité de manipulation pour remorque (110) est disposée sur le véhicule utilitaire (202).
